(19) **Europäisches Patentamt**
**European Patent Office**
**Office européen des brevets**

(11) **EP 1 523 728 B1**

(12) **EUROPÄISCHE PATENTSCHRIFT**

(45) Veröffentlichungstag und Bekanntmachung des Hinweises auf die Patenterteilung:
**28.03.2007 Patentblatt 2007/13**

(21) Anmeldenummer: **03764900.1**

(22) Anmeldetag: **11.07.2003**

(51) Int Cl.:
***G06K 19/06*** (2006.01)

(86) Internationale Anmeldenummer:
**PCT/DE2003/002396**

(87) Internationale Veröffentlichungsnummer:
**WO 2004/010371 (29.01.2004 Gazette 2004/05)**

(54) **VERFAHREN ZUR ERZEUGUNG EINES MATRIXCODES**

METHOD FOR GENERATING A MATRIX CODE

METHODE DE PRODUCTION D'UN CODE A MATRICE

(84) Benannte Vertragsstaaten:
**AT BE BG CH CY CZ DE DK EE ES FI FR GB GR HU IE IT LI LU MC NL PT RO SE SI SK TR**

(30) Priorität: **12.07.2002 DE 10232613**

(43) Veröffentlichungstag der Anmeldung:
**20.04.2005 Patentblatt 2005/16**

(73) Patentinhaber: **Secrypt Gmbh Encryption and Matrixcode Technologies**
**12103 Berlin (DE)**

(72) Erfinder: **SCHLEDE, Matthias**
**10781 Berlin (DE)**

(74) Vertreter: **Müller, Wolfram Hubertus et al**
**Patentanwälte**
**Maikowski & Ninnemann,**
**Postfach 15 09 20**
**10671 Berlin (DE)**

(56) Entgegenhaltungen:
**US-A1- 2001 028 000        US-B1- 6 267 296**
**US-B1- 6 408 106**

**Beschreibung**

Barcode- und Matrixcode-Systeme ermöglichen die Speicherung von Daten in Form bestimmter Muster (im weitesten Sinne Striche oder Punkte) auf Oberflächen wie beispielsweise Papier.

Bar- und Matrixcodes kommen in einem IT-System immer.dann zum Einsatz, wenn es darum geht, über einen Ausdruck maschinenlesbar elektronische Daten auf unterschiedlichen Medien zu speichern. Die Daten bestehen in der Regel aus Ziffern oder alphanumerischen Zeichen.

Für den Ausdruck solcher Codes auf unterschiedlichen Materialien werden verschiedene Geräte (z.B. Tintenstrahl-, Laser-, Thermodrucker) und Technologien (z.B. Laserbeschriftung von Mikrochips) eingesetzt. Zum Lesen von Bar- und Matrixcodes werden ein Lesegerät (z.B. Scanner) und ein Decoder benötigt, die sich gemeinsam in einer Leseeinheit befinden können.

Matrixcodes sind eine Weiterentwicklung herkömmlicher Barcodes. In 2D-Codes können deutlich mehr Informationen gespeichert werden, als in herkömmlichen Barcodetypen.

Matrixcodes weisen in der Regel Markierungen auf - die im Folgenden als Marker bezeichnet werden - mittels derer die Position von Informationseinheiten des Matrixcodes bestimmt werden kann. Aufgrund dieser Markierungshilfen können sie aus verschiedenen Richtungen gelesen werden. Zur Erfassung und der anschließenden Auswertung der 2D-Codes werden in der Regel CCD-Scanner (CCD = Charged Coupled Device) eingesetzt.

Die Informationseinheiten eines Matrixcodes werden im Folgenden als Spots bezeichnet. Der Name rührt daher, dass eine gesetzte Informationseinheit auf dem Ausgabemedium (z.B. Papier) unter dem Mikroskop als mehr oder weniger kreisförmiger Fleck, und nicht als Quadrat wie in der Urspungsbilddatei, erscheint. Dieser Effekt erklärt sich beispielsweise bei Tintenstrahldruckern durch das Zerfließen der Tinte auf dem Ausgabemedium.

Marker sind Strukturen, die in den Matrixcode eingebettet sind. Sie besitzen die gleiche Form und Größe und sind in einem zweidimensionalen Gitter angeordnet.

Marker tragen keine Informationen; sie sind Hilfsstrukturen zur Lokalisierung der informationstragenden Einheiten des Matrixcodes, der Spots.

Solche Marker werden in Dokument US-A-2001 028000 offenbart.

Die Zentren der Spots stehen in einer berechenbaren Beziehung zu den Zentren der Marker. In einer Bilddatei, die einen neu erzeugten Matrixcode enthält, ist diese Beziehung exakt dargestellt. Das von den Markern gebildete Gitter definiert nach geeigneter Wahl eines Ursprungs ein Koordinatensystem. Die Position der Spots wird anhand ihrer Koordinaten in dem Koordinatensystem bestimmt.

Durch die technischen Prozesse der Übertragung des Matrixcodes auf ein Ausgabemedium (z.B. Papier) und das anschließende erneute Digitalisieren (mittels Scannen) des ausgedruckten Matrixcodes kann dieser eine Verformung erfahren. Die Marker sind jedoch von ihrer Größe und Struktur so angelegt, dass sie nach einer solchen Verformung durch geeignete Fuzzy-Bildalgorithmen in der Regel wieder auffindbar sind. Ihre Zentren bilden die Gitterpunkte des verformten Koordinatensystems.

Die Lokalsierung der Spotzentren gelingt um so besser, je besser die Verformung des Matrixcodes durch die Verformung des Koordinatengitters erfasst wird. Die Gitterverformung approximiert dabei die Verformung des Matrixcodes um so besser, je geringer der maximale Abstand eines beliebigen Spots des Matrixcodes von dem ihm nächstgelegenen Gitterpunkt ist.

Dieser maximale Abstand kann durch die Dichte der Gitterpunkte des Koordinatengitters beeinflusst werden. Unter dem Gesichtspunkt der Verformungsapproximation sollte die Dichte möglichst hoch sein. Da durch den von Markern benötigten Raum die Informationsdichte des Matrixcodes herabgesetzt wird, verbietet es sich jedoch, zu hohe Markerdichten anzusetzen.

Die vorliegende Erfindung hat zur Aufgabe, sich dieser Problematik anzunehmen. Insbesondere ist es eine Aufgabe der Erfindung, eine bessere Verformungsapproximation zu erreichen, ohne die Informationsdichte des Matrixcodes zu verringern.

Diese Aufgabe wird durch die in den unabhängigen Ansprüchen angegebene Erfindung gelöst. Vorteilhafte Ausgestaltungen sind den Unteransprüchen zu entnehmen.

Erfindungsgemäß ist ein Verfahren geschaffen zur Erzeugung eines Matrixcodes mit einer Vielzahl von Bildpunkten und Markern, mit folgenden Schritten:

Erzeugen einer Vielzahl von Bildpunkten in Zeilen und Spalten, wobei die Zeilen entlang der x-Achse und die Spalten entlang der y-Achse eines Koordinatensystems verlaufen; und
Erzeugen einer Vielzahl von Markern, die die Gitterpunkte eines Gitters bilden, wobei die Gitterpunkte jeder Zelle des Gitters voneinander verschiedene x- und/oder y-Koordinaten bezüglich des besagten Koordinatensystems haben.

Durch diese Schrägstellung des Markergitters gegenüber den Zeilen und Spalten der Bildpunkte wird eine höhere Markerauflösung entlang der x-Achse und der y-Achse erreicht, ohne die Anzahl der Marker erhöhen zu müssen. Damit kann eine bessere Lokalisierung der Spots mittels der Marker durchgeführt werden, ohne die Informationsdichte des Matrixcodes zu verringern.

Die Gitterzellen können viereckig, quadratisch, trigonal oder hexagonal sein.

Generell sollte die Verteilung der Gitterpunkte möglichst gleichmäßig sein. Das heißt, dass bei gegebenem Flächeninhalt der Wigner-Seitz-Zelle der maximale Abstand von ihrem Mittelpunkt zu ihrem Rand möglichst gering sein sollte. Die Wigner-Seitz-Zelle eines Gitterpunktes ist jenes räumliche Gebilde, in dem jeder Punkt des Raumes dem assozierten Gitterpunkt näher ist, als allen anderen.

Um verschiedene Gittertypen miteinander vergleichen zu können, wird der maximale Abstand des Mittelpunktes der jeweiligen Wigner-Seitz-Zelle von ihrem Rand berechnet. Die Wigner-Seitz-Zellen sind dabei auf den Flächeninhalt 1 normiert. Für ein rechteckiges Gitter sind die Seitenlängen n und 1/n. Der maximale Abstand von der Zellmitte zum Rand ist

$$\mathtt{Sqrt(n*n/4 + 1/(4*n\text{\textasciicircum}2)).}$$

Durch Differenzieren des Terms unter der Wurzel erhält man

$$\mathtt{n/2 - 2/(4*n\text{\textasciicircum}3),}$$

und durch Nullsetzung

$$\mathtt{n/2 * 4*n\text{\textasciicircum}3 = 2,}$$

$$\mathtt{n\text{\textasciicircum}4 = 1,}$$

$$\mathtt{n = 1.}$$

Der Spezialfall des quadratischen Gitters (Kantenlängen n=1/n=1) führt auf das gleichmäßigste rechteckige Gitter. Der maximale Abstand der Zellmitte zum Rand beträgt

$$\mathtt{Sqrt(1/4+1/4) = Sqrt(1/2) = 0,7071.}$$

Für die Einheits-Wigner-Seitz-Zelle des trigonalen Gitters ergibt sich 0,6580. Für das hexagonale Gitter 0,6204. Beim hexagonalen Gitter sind die Gitterpunkte somit am gleichmäßigsten, beim rechteckigen am ungleichmäßigsten verteilt.

Insbesondere ist der Matrixcode zum Ausdruck auf ein Medium wie beispielsweise Papier mittels eines Druckers bestimmt, wobei der Drucker zum zeilenweisen Druck ausgebildet ist, und die x-Achse des Koordinatensystems parallel zu den Druckzeilen verläuft.

Durch die höhere Auflösung des Markergitters in x- und y-Richtung kann Stauchungen oder Verzerrungen in den beim Druck relevanten Richtungen, also in horizontaler (Zeilen- oder Druckrichtung) und vertikaler (Vorschubrichtung des Druckers) Richtung, entgegengewirkt werden.

Erfindungsgemäß ist außerdem ein Verfahren geschaffen zur Erzeugung eines Matrixcodes mit einer Vielzahl von Bildpunkten und Markern, mit folgenden Schritten:

Erzeugen einer Vielzahl von Bildpunkten, die in Zeilen und dazu senkrechten Spalten angeordnet sind; und
Erzeugen einer Vielzahl von Markern, die derart angeordnet sind, dass jede Gerade, die durch zwei benachbarte Marker verläuft, gegenüber der Zeilen- und Spaltenausrichtung schräg verläuft.

Weiterhin ist ein Verfahren geschaffen zur Erzeugung eines Matrixcodes mit einer Vielzahl von Bildpunkten und Markern, mit folgenden Schritten:

Erzeugen einer Vielzahl von Bildpunkten bezüglich eines ersten Koordinatensystems; und
Erzeugen einer Vielzahl von Markern bezüglich eines zweiten Koordinatensystems, wobei die Koordinatenachsen des ersten und des zweiten Koordinatensystemes nicht kollinear sind.

Darüber hinaus ist ein Verfahren geschaffen zur Erzeugung eines Matrixcodes mit einer Vielzahl von Bildpunkten und Markern, mit folgenden Schritten:

Erzeugen einer Vielzahl von Bildpunkten bezüglich eines ersten orthogonalen Koordinatensystems; und
Erzeugen einer Vielzahl von Markern bezüglich eines zweiten orthogonalen Koordinatensystems, wobei das zweite Koordinatensystem gegenüber dem ersten Koordinatensystem um einen vorbestimmten Winkel verdreht ist.

Insbesondere weisen das erste und das zweite Koordinatensystem jeweils eine x- und eine y-Koordinatenachse auf, wobei die Bildpunkte bzw. Marker in Zeilen und Spalten angeordnet sind, die jeweils parallel zu der x- bzw. y-Achse des jeweiligen Koordinatensystems verlaufen.
Der vorbestimmte Winkel ist vorzugsweise kleiner als 90°.
Darüber hinaus ist ein Computer geschaffen zur Erzeugung eines Matrixcodes gemäß dem oben beschriebenen Verfahren, und zur Erzeugung einer Bilddatei, deren Bilddaten den derart erzeugten Matrixcode darstellen. Außerdem ist ein Computerprogramm geschaffen, zur Ausführung des oben beschriebenen Verfahrens, und zur Erzeugung einer Bilddatei, deren Bilddaten den derart erzeugten Matrixcode darstellen, auf einem Computer.
Die vorliegende Erfindung wird nun anhand eines Ausführungsbeispieles in Bezug auf die Zeichnungen erläutert, und es zeigen:

Figur 1 eine konventionelle Markeranordnung bei einer horizontalen Stauchung der Matrixcodevorlage;

Figur 2 eine Markeranordnung nach einer Ausgestaltung der Erfindung ebenfalls bei horizontaler Stauchung der Matrixvorlage;

Figur 3 eine konventionelle Markeranordnung bei einer vertikalen Stauchung der Matrixcodevorlage; und

Figur 4 eine Markeranordnung nach einer Ausgestaltung der Erfindung ebenfalls bei vertikaler Stauchung der Matrixvorlage.

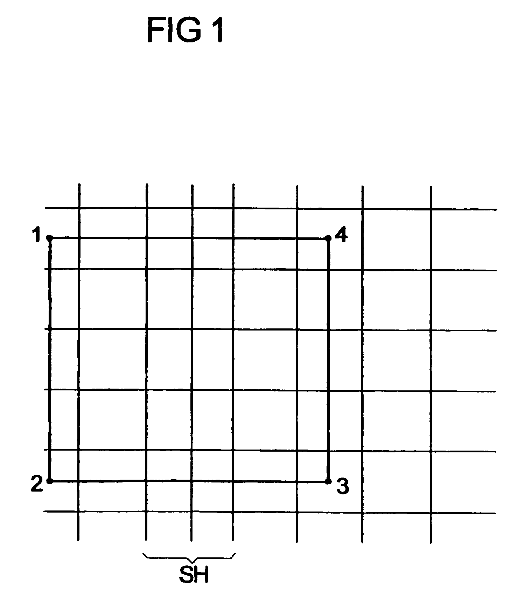

Die Erfindung beruht auf der Erkenntnis, dass bei der technischen Erzeugung von Matrixcodes insbesondere horizontale und vertikale Vorschübe eine Rolle spielen (z.B. Papiereinzug bei Ausgabe durch einen Drucker). Diese können im Allgemeinen nicht mit exakt konstanter Geschwindigkeit vollzogen werden. Daher ist zu erwarten, dass mögliche Verformungen eines Matrixcodes wesentlich durch Stauchungen bzw. Streckungen in horizontaler oder vertikaler Richtung geprägt sind. Unter dieser Annahme lässt sich die Approximation der Matrixcodeverformung durch das Markergitter verbessern, in dem die Gitterbasis in Schräglage zu der durch die Druckrichtung des Matrixcodes bestimmten Basis gebracht wird.
Dies soll nun für ein quadratisches Gitter anhand einiger Szenarien demonstriert werden. Figur 1 zeigt eine Stauchung in horizontaler Richtung (Bereich SH) und eine durch die Gitterpunkte 1, 2, 3 und 4 begrenzte Elementarzelle in kollinearer Ausrichtung. Die Stauchung bleibt unerkannt, da sie in einem Intervall wirkt, in dem sich kein Marker befindet.

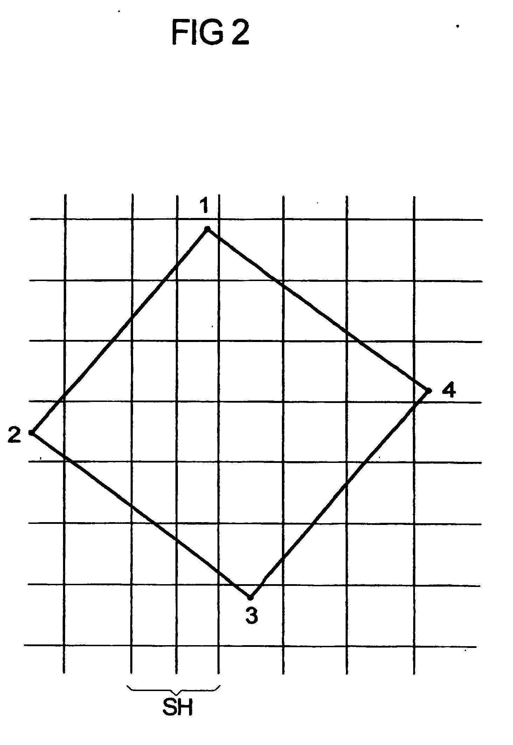

Figur 2 zeigt die selbe Stauchung und die Elementarzelle eines rotierten Gitters. Hier liegt der Marker 1 im Bereich der Stauchung SH; diese wird demnach durch das Markergitter erfasst. Die Schräglage des Gitters bewirkt eine gleichmäßigere Verteilung der x-Koordinaten der Gitterpunkte. Die Länge der Intervalle, in denen kein Marker vorkommt, ist kleiner.

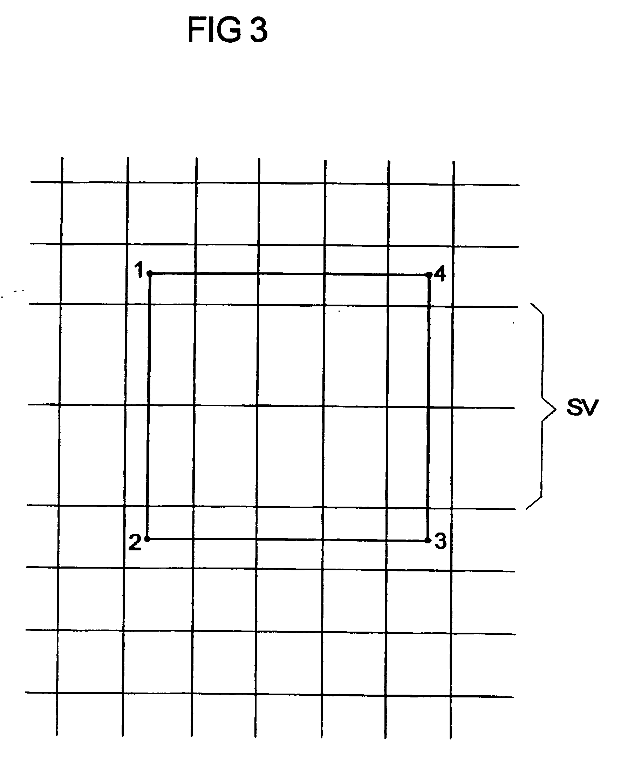

In Figur 3 ist eine Streckung in vertikaler Richtung (Bereich SV) und eine Elementarzelle eines kollinear ausgerichteten Gitters dargestellt.

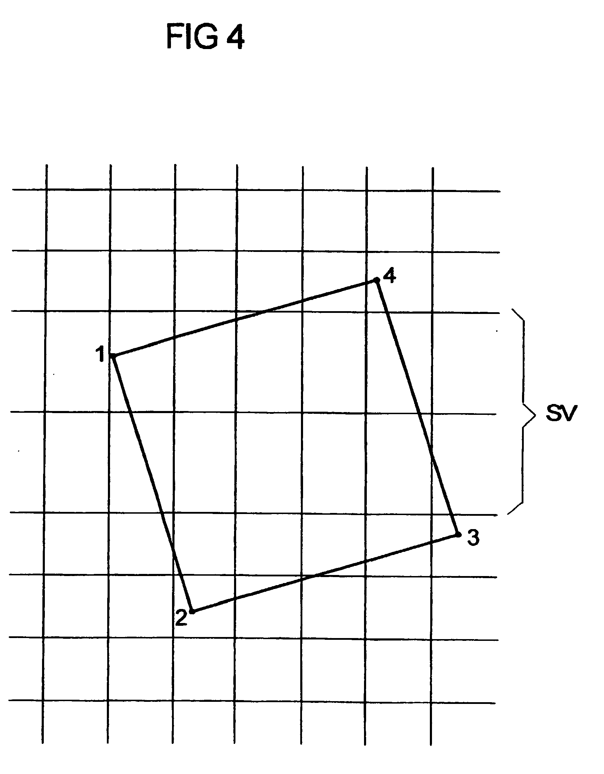

In Figur 4 ist die selbe Streckung und die Elementarzelle eines rotierten Gitters dargestellt. Marker 4 liegt im Einflussbereich der Streckung. Mit der Anordnung in Schräglage kann der Gradient der Streckung, d.h. deren Veränderung in y-Richtung abgeschätzt werden. Bei der kollinearen Anordnung ist dies nicht möglich, da die Marker 1 und 4 bzw. 2 und 3 dieselben y-Koordinaten haben und nicht im Einflussbereich der Streckung liegen.

Anzumerken ist, dass die Erfindung nicht auf die beschriebenen Ausführungsbeispiele beschränkt ist, sondern Variationen innerhalb des durch die Ansprüche definierten Schutzbereiches umfasst. Insbesondere ist die Erfindung nicht auf quadratische Gitter beschränkt, sondern ist beispielsweise auch auf andere rechteckige, trigonale oder hexagonale Gitter anwendbar.

**Patentansprüche**

1. Verfahren zur Erzeugung eines Matrixcodes mit einer Vielzahl von Bildpunkten und Markern (1, 2, 3, 4), mit folgenden Schritten:

    Erzeugen einer Vielzahl von Bildpunkten in Zeilen und Spalten, wobei die Zeilen entlang der x-Achse und die Spalten entlang der y-Achse eines Koordinatensystems verlaufen; und
    Erzeugen einer Vielzahl von Markern, die die Gitterpunkte eines Gitters bilden, wobei die Gitterpunkte jeder Zelle des Gitters voneinander verschiedene x- und/oder y-Koordinaten bezüglich des besagten Koordinatensystems haben.

2. Verfahren nach Anspruch 1, wobei die Gitterzellen viereckig sind.

3. Verfahren nach Anspruch 2, wobei die Gitterzellen quadratisch sind.

4. Verfahren nach Anspruch 1, wobei die Gitterzellen trigonal sind.

5. Verfahren nach Anspruch 1, wobei die Gitterzellen hexagonal sind.

6. Verfahren nach einem der vorhergehenden Ansprüche, wobei der Matrixcode zum Ausdruck auf ein Medium wie beispielsweise Papier mittels eines Druckers bestimmt ist, und der Drucker zum zeilenweisen Druck ausgebildet ist, und wobei die x-Achse des Koordinatensystems parallel zu den Druckzeilen verläuft.

7. Verfahren zur Erzeugung eines Matrixcodes mit einer Vielzahl von Bildpunkten und Markern, mit folgenden Schritten:

    Erzeugen einer Vielzahl von Bildpunkten, die in Zeilen und dazu senkrechten Spalten angeordnet sind; und
    Erzeugen einer Vielzahl von Markern, die derart angeordnet sind, dass jede Gerade, die durch zwei benachbarte Marker verläuft, gegenüber der Zeilen- und Spaltenausrichtung schräg verläuft.

8. Verfahren zur Erzeugung eines Matrixcodes mit einer Vielzahl von Bildpunkten und Markern (1, 2, 3, 4), mit folgenden Schritten:

    Erzeugen einer Vielzahl von Bildpunkten bezüglich eines ersten Koordinatensystems mit einer x- und einer y-Achse; und
    Erzeugen einer Vielzahl von Markern bezüglich eines zweiten Koordinatensystems, wobei die Koordinatenachsen des ersten und des zweiten Koordinatensystemes nicht kollinear derart ausgebildet sind, dass zwei benachbarte Marker voneinander verschiedene x- und y-Koordinaten bezüglich des ersten Koordinatensystems haben.

9. Verfahren zur Erzeugung eines Matrixcodes mit einer Vielzahl von Bildpunkten und Markern (1, 2, 3, 4), mit folgenden Schritten:

    Erzeugen einer Vielzahl von Bildpunkten bezüglich eines ersten orthogonalen Koordinatensystems mit einer x- und einer y-Achse; und
    Erzeugen einer Vielzahl von Markern bezüglich eines zweiten orthogonalen Koordinatensystems, und wobei das zweite Koordinatensystem gegenüber dem ersten Koordinatensystem um einen vorbestimmten Winkel so verdreht ist, dass zwei benachbarte Marker voneinander verschiedene x- und y-Koordinaten bezüglich des ersten Koordinatensystems haben.

**10.** Verfahren nach Anspruch 9, wobei auch das zweite Koordinatensystem eine x- und eine y-Koordinatenachse aufweist, und die Bildpunkte bzw. Marker in Zeilen und Spalten angeordnet sind, die jeweils parallel zu der x- bzw. y-Achse des jeweiligen Koordinatensystems verlaufen.

**11.** Verfahren nach Anspruch 9 oder 10, wobei der vorbestimmte Winkel kleiner als 90° ist.

**12.** Computer zur Erzeugung eines Matrixcodes gemäß dem Verfahren nach einem der vorhergehenden Ansprüche, und zur Erzeugung einer Bilddatei, deren Bilddaten den derart erzeugten Matrixcode darstellen.

**13.** Computerprogramm, zur Ausführung des Verfahrens nach einem der Ansprüche 1 bis 11, und zur Erzeugung einer Bilddatei, deren Bilddaten den derart erzeugten Matrixcode darstellen, auf einem Computer.

**Claims**

**1.** Method for generating a matrix code having a multiplicity of pixels and markers (1, 2, 3, 4), comprising the following steps:

> generating a multiplicity of pixels in rows and columns, the rows extending along the x-axis and the columns extending along the y-axis of a coordinate system; and
> generating a multiplicity of markers which form the grid points of a grid, wherein the grid points of each cell of the grid have mutually different x- and/or y-coordinates with respect to said coordinate system.

**2.** Method according to Claim 1, wherein the grid cells are quadrangular.

**3.** Method according to Claim 2, wherein the grid cells are square.

**4.** Method according to Claim 1, wherein the grid cells are trigonal.

**5.** Method according to Claim 1, wherein the grid cells are hexagonal.

**6.** Method according to one of the preceding claims, wherein the matrix code is intended to be printed onto a medium such as paper, for example, by using a printer, and the printer is designed for row-by-row printing and wherein the x-axis of the coordinate system extends parallel to the printed rows.

**7.** Method for generating a matrix code having a multiplicity of pixels and markers, comprising the following steps:

> generating a multiplicity of pixels which are arranged in rows and columns which are perpendicular to the rows; and
> generating a multiplicity of markers which are arranged such that each straight line extending through two adjacent markers extends obliquely with respect to the row and column alignment.

**8.** Method for generating a matrix code having a multiplicity of pixels and markers (1, 2, 3, 4), comprising the following steps:

> generating a multiplicity of pixels with respect to a first coordinate system having an x- and a y-axis; and
> generating a multiplicity of markers with respect to a second coordinate system, wherein the coordinate axes of the first and of the second coordinate system are of non-collinear design such that two adjacent markers have mutually different x- and y-coordinates with respect to the first coordinate system.

**9.** Method for generating a matrix code having a multiplicity of pixels and markers (1, 2, 3, 4), comprising the following steps:

> generating a multiplicity of pixels with respect to a first orthogonal coordinate system having an x- and a y-axis; and
> generating a multiplicity of markers with respect to a second orthogonal coordinate system, and wherein the second coordinate system is rotated with respect to the first coordinate system by a predefined angle such that two adjacent markers have mutually different x- and y-coordinates with respect to the first coordinate system.

10. Method according to Claim 9, wherein the second coordinate system also has an x- and a y-coordinate axis and the pixels or markers, respectively, are arranged in rows and columns, which respectively extend in each case parallel to the x- or y-axis of the respective coordinate system.

11. Method according to Claim 9 or 10, wherein the predefined angle is less than 90°.

12. Computer for generating a matrix code as per the method according to one of the preceding claims and for generating an image file, whose image data represent the matrix code generated in this manner.

13. Computer program for implementing the method according to one of Claims 1 to 11 and for generating an image file, whose image data represent the matrix code generated in this manner, on a computer.

**Revendications**

1. Procédé pour générer un code à matrice comprenant une pluralité de pixels et de marqueurs (1, 2, 3, 4) avec les étapes suivantes :

   génération d'une pluralité de pixels en lignes et en colonnes, les lignes s'étendant le long de l'axe x et les colonnes le long de l'axe y d'un système de coordonnées ; et
   génération d'une pluralité de marqueurs qui forment les noeuds de réseau d'une grille, les noeuds de réseau de chaque cellule de la grille possédant les uns par rapport aux autres des coordonnées x et/ou y différentes en référence audit système de coordonnées.

2. Procédé selon la revendication 1, les cellules de la grille étant quadrangulaires.

3. Procédé selon la revendication 2, les cellules de la grille étant carrées.

4. Procédé selon la revendication 1, les cellules de la grille étant trigonales.

5. Procédé selon la revendication 1, les cellules de la grille étant hexagonales.

6. Procédé selon l'une des revendications précédentes, le code à matrice étant destiné à l'impression sur un support tel que du papier, par exemple, au moyen d'une imprimante et l'imprimante étant configurée pour l'impression ligne par ligne et l'axe x du système de coordonnées s'étendant parallèlement aux lignes d'impression.

7. Procédé pour générer un code à matrice comprenant une pluralité de pixels et de marqueurs avec les étapes suivantes :

   génération d'une pluralité de pixels qui sont disposés en lignes et en colonnes perpendiculaires à celles-ci ; et
   génération d'une pluralité de marqueurs qui sont disposés de telle sorte que chaque droite qui s'étend à travers deux marqueurs voisins s'étend en biais par rapport à l'orientation des lignes et des colonnes.

8. Procédé pour générer un code à matrice comprenant une pluralité de pixels et de marqueurs (1, 2, 3, 4) avec les étapes suivantes :

   génération d'une pluralité de pixels en référence à un premier système de coordonnées comprenant un axe x et un axe y ; et
   génération d'une pluralité de marqueurs en référence à un deuxième système de coordonnées, les axes de coordonnées des premier et deuxième systèmes de coordonnées étant configurés de manière non colinéaire de telle sorte que deux marqueurs voisins possèdent des coordonnées x et y différentes l'une de l'autre en référence au premier système de coordonnées.

9. Procédé pour générer un code à matrice comprenant une pluralité de pixels et de marqueurs (1, 2, 3, 4) avec les étapes suivantes :

   génération d'une pluralité de pixels en référence à un premier système de coordonnées orthogonal comprenant un axe x et un axe y ; et

génération d'une pluralité de marqueurs en référence à un deuxième système de coordonnées orthogonal, le deuxième système de coordonnées étant pivoté selon un angle prédéfini par rapport au premier système de coordonnées de telle sorte que deux marqueurs voisins possèdent des coordonnées x et y différentes l'une de l'autre en référence au premier système de coordonnées.

10. Procédé selon la revendication 9, le deuxième système de coordonnées présentant lui aussi un axe de coordonnées x et un axe de coordonnées y et les pixels ou les marqueurs étant disposés en lignes et en colonnes qui s'étendent à chaque fois parallèlement à l'axe x ou y du système de coordonnées correspondant.

11. Procédé selon la revendication 9 ou 10, l'angle prédéfini étant inférieur à 90°.

12. Ordinateur pour générer un code à matrice conformément au procédé selon l'une des revendications précédentes et pour générer un fichier d'image dont les données d'image représentent le code à matrice ainsi généré.

13. Programme informatique destiné à mettre en oeuvre le procédé selon l'une des revendications 1 à 11 et pour générer sur un ordinateur un fichier d'image dont les données d'image représentent le code à matrice ainsi généré.

# FIG 1

# FIG 2

# FIG 3

FIG 4